# EUROPÄISCHE PATENTSCHRIFT

(11) **EP 0 779 439 B1**
(45) Veröffentlichungstag und Bekanntmachung des Hinweises auf die Patenterteilung: **06.03.2002**
(21) Anmeldenummer: 96119810.8
(22) Anmeldetag: 10.12.1996
(51) Int. Cl.: F16B 21/08, F16B 5/12, F16L 3/13

(54) **Halteelement aus Kunststoff**
Plastic fastening element
Dispositif de retenue en matière plastique

(30) Priorität: 12.12.1995 DE 19546402
(43) Veröffentlichungstag der Anmeldung: 18.06.1997
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 567 017
- EP-A- 0 627 566
- DE-A- 2 728 294
- DE-C- 1 430 067
- GB-A- 2 202 270
- US-A- 2 271 495
- US-A- 5 184 794

## Beschreibung

Die Erfindung bezieht sich auf ein Halteelement aus Kunststoff, mit einem Haltedübel mit bolzenartigem Grundkörper und einem Abschlussteil, wobei der Grundkörper an dem dem Abschlussteil gegenüberliegenden Ende offen ausgebildet ist und mindestens einen, sich in Längsrichtung erstreckenden, faltenartig eingezogenen Bereich aufweist, in welchem auf dem Umfang des Grundkörpers, dem Abschlussteil gegenüberliegend, Rastelemente angeordnet sind, wobei der Haltedübel über das Abschlussteil mit einem Befestigungselement verbunden ist.

Als nächstkommender Stand der Technik ist bereits eine derartige Konstruktion bekannt, welche insbesondere in der Kraftfahrzeugindustrie Anwendung findet (DE 43 18 534 A1 analog EP-A 0 627 566). Dieses bekannte Halteelement ist als einstückiger Haltedübel ausgebildet und dient dazu, in eine Öffnung eines Trägers, insbesondere einer Kraftfahrzeugkarosserie, eingesetzt zu werden und zwischen dem Abschlussteil und dem oberen Bereich des bolzenartigen Grundkörpers ein mit einer Öffnung versehenes Teil an dem Träger zu haltern.

Weiterer Stand der Technik ist ein Halteelement mit zwei Rohrhaltebereichen (GB 2 202 270 A). Hier sind aus weicherem Material bestehende Rippen in eine innere Schale eingespritzt. Weitere Bereiche mit dem Einsatz von weicherem Material sind nicht vorgesehen.

Darüber hinaus wurde vorgeschlagen (DE 195 04 692.7) bei einem Träger, insbesondere einem Karosserieteil eines Kraftfahrzeuges und einem Plattenelement, insbesondere einer Türverkleidung zwei Teil vorzusehen, nämlich ein Oberteil mit Taschen, in welches der obere Bereich eines Halteteils eingeschoben werden kann. Dieses Halteteil ist wiederum mit einem bolzenartigen Grundkörper versehen, der an dem dem Abschlussteil gegenüberliegenden Ende offen ausgebildet ist.

Aufgabe der vorliegenden Erfindung ist es demgegenüber, ein Halteelement zu schaffen, welches einen breiteren Anwendungsbereich besitzt und den zu halternden Teilen und/oder im Befestigungsbereich eines Haltedübels an einem Träger eine sowohl form- als auch kraftschlüssige Lagerung mit abdichtender Wirkung bietet.

Diese Aufgabe wird gemäß einer Ausführungsform der Erfindung mit dem kennzeichnenden Teil des Anspruchs 1 gelöst.

Damit liegen zwei Materialkomponenten vor, wobei die härtere Materialkomponente mit ihrem bolzenartigen Grundkörper in die Öffnung einer Trägerplatte, insbesondere einer Kraftfahrzeugkarosserie einsetzbar ist, während das Befestigungselement aus einem weicheren Material besteht und die sowohl form- als auch kraftschlüssige Halterung eines zu befestigenden Teils zumindest teilweise übernimmt. Hierbei lagern sich die weicheren Teile an dem zu befestigenden Element an und bewirken eine federnde Lagerung bzw. eine Lagerung, welche dazu beiträgt, ohne Vibrationen zu vermeiden. Darüber hinaus dient ein Bereich des elastischen Befestigungselements vorteilhafterweise als Dichtung gegenüber der Trägerplatte.

Diese Konstruktion nach dem Merkmal im kennzeichnenden Teil des Anspruchs 1 kann beispielsweise zur Halterung von Zierleisten, zur Aufnahme einer Türverkleidung oder eines Rohrhalters dienen, wobei ein aus härterem Material bestehender Bereich der Halteplatte eine formschlüssige Halterung beispielsweise einer Zierleiste gewährleistet, währende ein weicherer Bereich des Befestigungselements zu einer elastischen Lagerung und Verschiebesicherung dieser Zierleiste beiträgt.

Der Dichtbereich und der Andruckbereich können in weiterer Ausgestaltung der Erfindung jeweils rotationssymmetrisch ausgebildet sein, wobei der Andruckbereich und der Dichtbereich beispielsweise über mindestens zwei einander diagonal gegenüberliegende Stege miteinander verbunden sind.

Die Lösung der vorgenannten Aufgabe kann auch gemäß einer anderen Ausführungsform der Erfindung mit dem kennzeichnenden Teil des Anspruchs 4 erreicht werden. Diese Ausführungsform der Erfindung kann beispielsweise zur Halterung von Rohrleitungen dienen, wobei diese Rohrleitungen zumindest teilweise von dem weicheren Material des Befestigungselements umfasst werden und damit eine vibrationsärmere Lagerung gewährleistet ist. Der Zwischenbereich ist mit einem unterhalb des Abschlussteils angeordneten Dichtbereich verbunden, welcher den Grundkörper des Haltedübels umschließt. Hierdurch wird eine gute Abdichtung im Hinblick auf die Trägeröffnung, insbesondere einer Kraftfahrzeugkarosserie mit einem einzigen, im Zweikomponenten-Spritzverfahren hergestellten Element gewährleistet.

Eine weitere Aufgabenlösung ist im kennzeichnenden Teil des Anspruchs 9 beschrieben. Hierbei finden oberhalb und/oder unterhalb des Flanschs zwei miteinander verbundene Scheiben des Befestigungselements Anwendung. Die untere Scheibe des Befestigungselements kann den Grundkörper des Haltedübels umschließen und eine Dichtung darstellen, während der obere Bereich des Befestigungselements zwischen dem Flansch und einer Begrenzungsscheibe des Abschlussteils angeordnet ist

Die Erfindung wird nachfolgend anhand von in der Zeichnung dargestellten Ausführungsbeispielen näher beschrieben. In der Zeichnung zeigen:
- Fig. 1: eine Vorderansicht des erfindungsgemäßen Halteelements in einer ersten Ausführungsform mit Halterung einer im Schnitt dargestellten Zierleiste,
- Fig. 2: eine Seitenansicht des Halteelements nach Fig. 1,
- Fig. 3: eine Draufsicht auf das Halteelement nach Fig. 1,
- Fig. 4: einen Schnitt gemäß der Linie IV-IV in Fig. 3,
- Fig. 5: einen Schnitt gemäß der Linie V-V in Fig. 3,
- Fig. 6 und 7: perspektivische Ansichten des Halteelements nach Fig. 1 bis 5,
- Fig. 8: einen Schnitt durch eine zweite Ausführungsform des Halteelements in Seitenansicht,
- Fig. 9 und 10: perspektivische Ansichten des Halteelements nach Fig. 8,
- Fig. 11: einen Mittelschnitt durch eine dritte Ausführungsform des Halteelements,
- Fig. 12 und 13: jeweils perspektivische Ansichten des Halteelements nach Fig. 11.

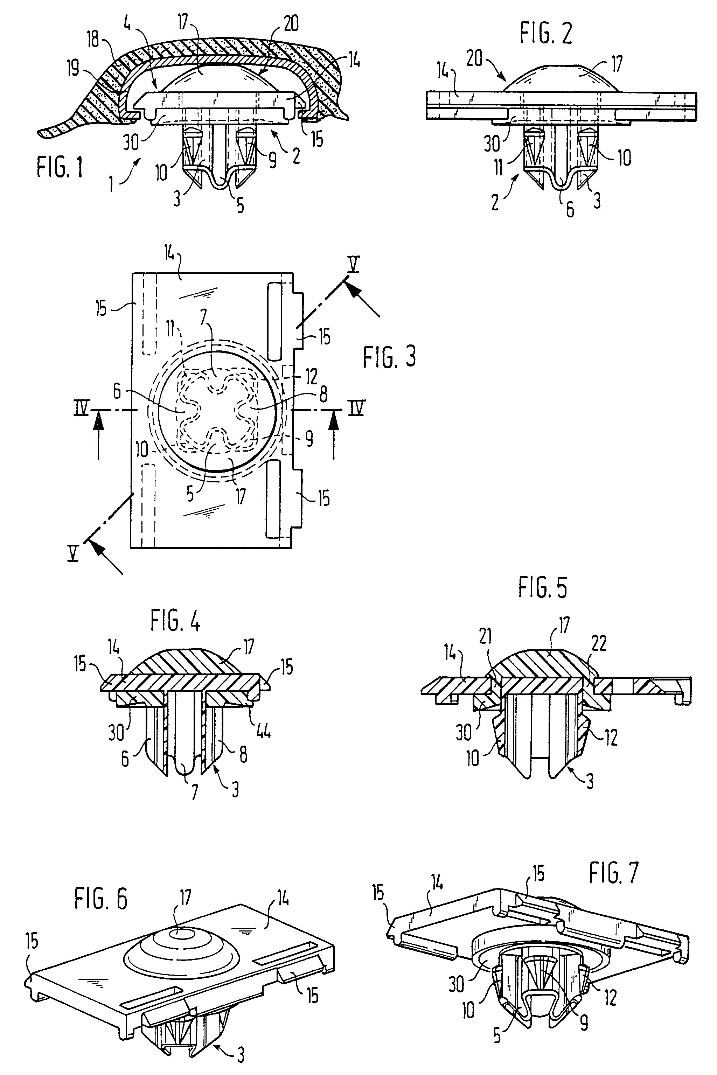

Das in den Fig. 1 bis 7 dargestellte Halteelement 1 einer ersten Ausführungsform setzt eine im wesentlichen aus einem Haltedübel 2 und einem Befestigungselement 20 zusammen, wobei beide Teile vorzugsweise im Zweikomponenten-Spritzverfahren hergestellt sind und damit eine einstückige Einheit bilden.

Das Befestigungselement 20 besteht hierbei aus einem gegenüber dem Material des Haltedübels 2 weicheren Material.

Der Haltedübel 2 weist einen bolzenartigen Grundkörper 3 und ein Abschlußteil 4 auf. Der Grundkörper 3 ist an dem dem Abschlußteil 4 gegenüberliegenden Ende offen ausgebildet und weist mindestens einen, sich in Längsrichtung erstreckenden, faltenartig eingezogenen Bereiche auf. Im vorliegenden Beispiel sind vier Bereiche 5, 6, 7, 8 (sh. Fig. 3) vorgesehen. Zwischen diesen faltenartig eingezogenen Bereichen sind über den Umfang des Grundkörpers 3 verteilt (und dem Abschlußteil 4 gegenüberliegend) Rastelemente 9, 10, 11, 12 (Fig. 1, 2, 3, 5) angeordnet.

Aus den Fig. 1 bis 7 geht hervor, daß das Abschlußteil 4 des Haltedübels 2 als Halteplatte 14 mit Eingriffselementen 15 ausgebildet ist. Diese Eingriffselemente 15 dienen beispielsweise zur Halterung einer Zierleiste 18, welche aus weichem Material besteht und mit einem aus Metall gefertigten Lagerbereich 19 versehen ist (Fig.1 ).

Oberhalb der Halteplatte 14 weist das Befestigungselement 20 einen Andruckbereich 17 auf, welcher kuppelartig gewölbt ausgebildet ist. Wie aus Fig. 1 ersichtlich, beaufschlagt damit dieser kuppelartig gewölbte Andruckbereich 17 des aus weicherem Material bestehenden Befestigungselements 20 eine Zone des Lagerbereichs 19 der Zierleiste 18. Damit wird diese über die Eingriffselemente 15 des aus härterem Material bestehenden Halteelements 2 und den z.B. kuppelartig gewölbten Andruckbereich 17 des aus weicheren Material bestehenden Befestigungselements 20 funktions- und verschiebesicher gehaltert.

Unterhalb der Halteplatte 14 befindet sich ein Dichtbereich 30, des Befestigungselements 20, welcher, wie insbesondere aus Fig. 5 hervorgeht, über Stege 21 und 22 mit dem Andruckbereich 17 verbunden ist. Diese Stege 21 und 22 durchsetzen damit die Halteplatte 14 und stellen eine Verbindung zwischen dem Andruckbereich 17 und dem Dichtbereich 30 des Befestigungsbereichs 20 dar.

Aus Fig. 1 und 3 bezüglich ihrer Längsachsen geht hervor, daß der Dichtbereich 30 und der Andruckbereich 17 jeweils rotationssymmetrisch ausgebildet sind. Demgegenüber kann die Halteplatte 14 als Rechteck gestaltet sein, wobei an den Längsseiten des Rechteckes die einander gegenüberliegenden Eingriffselemente 15 für die Zierleiste 18 angeordnet sind.

Ein mit einer Öffnung versehener, nicht näher dargestellter Träger, beispielsweise einer Kraftfahrzeugkarosserie, dient zum Einsetzen des erfindungsgemäßen Halteelements 1 über den bolzenartigen Grundkörper 3. Die obere Stirnfläche der Trägeröffnung wird von dem Dichtbereich 30 des aus weicherem Material bestehenden Befestigungselements 20 abgedeckt, wohingegen die oberen Zonen der Rastelemente 9, 10, 11 und 12 die untere Stirnseite des Trägers beaufschlagen; das erfindungsgemäße Halteelement 1 ist damit funktionssicher in dem Träger gehaltert und stellt eine gute Befestigungsmöglichkeit für die Zierleiste 18 dar.

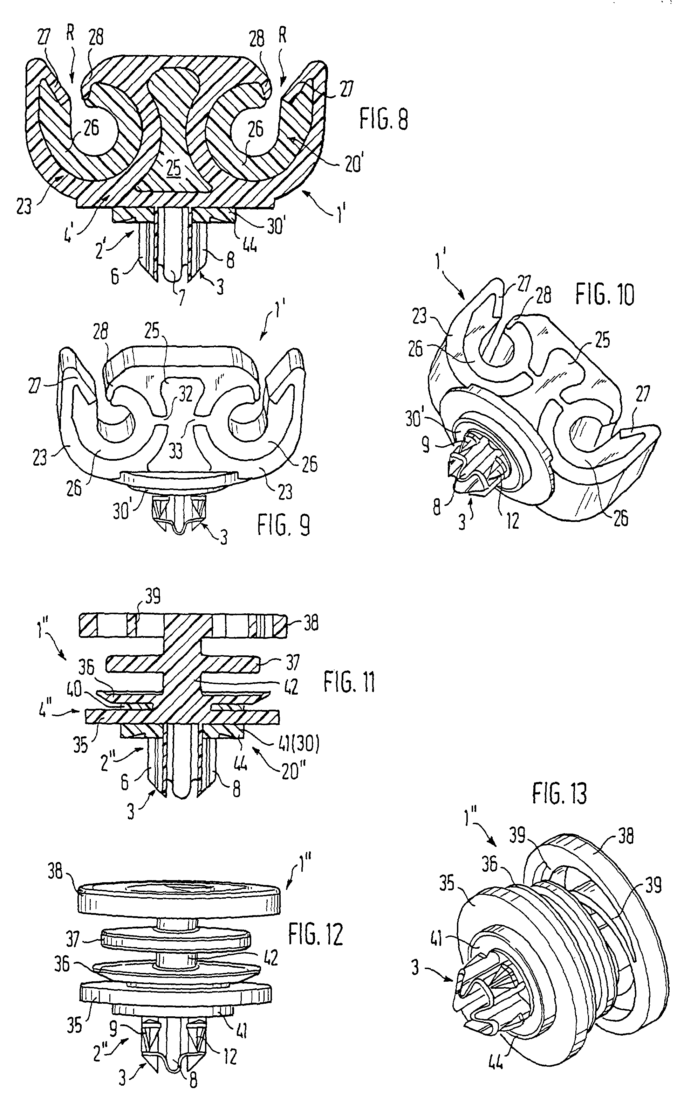

Bei der Ausführungsform nach Fig. 8, 9, 10, besteht das erfindungsgemäße Halteelement 1' wiederum aus einem Haltedübel 2' und einem Befestigungselement 20'. Analog der Ausführungsform nach Fig. 1 bis 7, ist das aus weichem Material hergestellte Befestigungselement 20' und der aus hartem Material hergestellte Haltedübel 2' im Zweikomponenten-Spritzverfahren erzeugt. Der Haltedübel 2' weist einen bolzenartigen Grundkörper 3 (analog der Bauform nach Fig. 1 bis 7) und ein Abschlußteil 4' auf, welches mit mindestens einem Lagerbereich 23 versehen ist. Das Befestigungselement 20' ist über einen Zwischenbereich 25 und mindestens einem Rohrhaltebereich 26 mit dem Abschlußteil 4' verbunden. Wie insbesondere aus Fig. 8 ersichtlich ist, ist der Rohrhaltebereich 26 des Befestigungselements 20' schalenförmig in den Lagerbereich 23 des Abschlußteils 4' eingebettet.

Bei der in Fig. 8 bis 10 dargestellten Ausführungsform sind beidseitig des Zwischenbereichs 25 jeweils ein Rohrhaltebereich 26 in einem Lagerbereich 23 eingebettet. Es bestehen auch nicht näher dargestellte Möglichkeiten, einseitig des Zwischenbereichs 25 nur einen Rohrhaltebereich 26 vorzusehen oder neben den in den Fig. 8 bis 10 dargestellten Rohrhaltebereichen 26 weitere Rohrhaltebereiche anzuordnen.

Aus Fig. 8 geht hervor, daß im Rohreintrittsbereich R Begrenzungszungen 27 und 28 angeordnet sind, welche den Rohrhaltebereich 26 überdecken. Damit können nicht näher dargestellte Rohre in dem Rohrhaltebereich 26 einwandfrei vor äußeren mechanischen Einwirkungen geschützt und vibrationsfrei gelagert werden.

Unterhalb des Zwischenbereichs 25 des Befestigungselements 20' befindet sich ein Dichtbereich 30'. Dieser Dichtbereich 30' ist über nicht näher dargestellte Verbindungsstege mit dem Zwischenbereich 25 verbunden.

Der bolzenartige Grundkörper 3 weist wiederum über den Umfang verteilte, einander gegenüberligende Rastelemente auf, zwischen welchen sich in Längsrichtung erstreckende, faltenartig eingezogene Bereiche analog der Ausführungsform nach Fig. 1 bis 7 befinden.

Während das Halteelement 1 nach der Ausführungsform gemäß Fig. 1 bis 7 insbesondere zur Halterung von Zierleisten 18 oder zur Aufnahme einer Türverkleidung oder anderen Teilen eines Kraftfahrzeugs dient, ist die Ausführungsform des Halteelements 1' nach Fig. 8 bis 10 insbesondere zur Halterung von Rohrleitungen einsetzbar, welche in den Rohrhaltebereichen 26 des aus weicherem Material bestehenden Befestigungselements 20' eingebettet sind.

Nach Fig. 9 und 10 können hierbei die inneren Bereiche des Lagerbereichs 23 seitliche Ausnehmungen 32 und 33 aufweisen, welche den Zwischenbereich 25 mit dem Rohrhaltebereich 26 verbinden.

Die in Fig. 11 bis 13 dargestellte dritte Ausführungsform des erfindungsgemäßen Halteelements 1'' weist wiederum einen Haltedübel 2'' mit bolzenartigem Grundkörper 3 auf, wobei der Haltedübel 2'' über ein Abschlußteil 4'' mit dem Befestigungselement 20" verbunden ist. Das Abschlußteil 4'' ist bei dieser Ausführungsform als Flansch 35 ausgebildet.

Oberhalb und unterhalb des Flansches 35 liegen zwei miteinander verbundene Scheiben 40 und 41 des aus weicherem Material bestehenden Befestigungselements 20''. Hierbei umschließt die untere Scheibe 41 des Befestigungselements 20'' den Grundkörper 3 des Haltedübels 2'' und bildet eine Dichtscheibe 30.

Der Grundkörper 3 ist analog den Ausführungsformen nach Fig. 1 bis 7 bzw. 8 bis 10 ausgebildet und weist mehrere, sich in Längsrichtung erstreckende faltenartig eingezogene Bereich 3 auf, zwischen welchen auf dem Umfang des Grundkörpers angeordnete Rastelemente angeordnet sind.

Wie insbesondere aus Fig. 11 hervorgeht, ist die obere Scheibe 40 des Befestigungselements 20'' zwischen dem Flansch 35 und einer Begrenzungsscheibe 36 des Abschlußteils 4'' angeordnet.

Oberhalb dieser Begrenzungsscheibe 36 befinden sich weitere Flansche 37 und 38, wobei der obere Flansch 38 über Arme 39 mit einem zentrischen Mittelzylinder 42 verbunden ist.

Die in Fig. 11 bis 13 dargestellte Ausführungsform des erfindungsgemäßen Halteelements 1'', welche zwei im Zweikomponenten-Spritzverfahren hergestellte, aus einem weicheren und einem härteren Material bestehende Teile aufweist, kann insbesondere zur Verbindung eines Karosserieteils eines Kraftfahrzeugs mit einem nicht näher dargestellten Plattenelement, beispielsweise einer Türverkleidung dienen. Hierbei wird der bolzenartige Grundkörper 3 in eine Trägeröffnung eingesetzt und dichtet über die Scheibe 41 diese Trägeröffnung einwandfrei ab, wohingegen über die Scheibe 40 eine Verbindung zu den einzelnen Flanschen 36, 37, 38 hergestellt wird, welche zur Halterung der Türverkleidungen dienen.

Die Dichtscheibe 30, welche bei allen Ausführungsformen den Grundkörper 3 umschließt, kann im Bereich des äußeren Umfangs eine Dichtlippe 44 aufweisen, was zu einer Verbesserung der Dichtwirkung des jeweiligen Halteelements führt.

Bei allen Ausführungsformen besteht die Möglichkeit, daß der Grundkörper 3, welcher offen ausgebildet ist, auch weicheres Material einlagert. Dadurch kann der aus härterem Material bestehende Grundkörper 3 flexibler gestaltet werden, weil das weichere Material einen Teil der Haltekraft übernimmt, was insbesondere bei Langzeitbeeinflussung von Vorteil ist.

Allen Ausführungsformen des erfindungsgemäßen Halteelements 1 bzw. 1' bzw. 1'' ist gemeinsam, daß dieses aus zwei, insbesondere im Zweikomponenten-Spritzverfahren hergestellten Teilen besteht, wobei ein erster Teil aus weicherem und ein zweiter Teil aus härterem Material gestaltet ist. Der aus härterem Material bestehende Teil weist den Grundkörper 3 auf, welcher sich in einer Trägeröffnung einlagert, wohingegen der aus weicherem Material bestehende Teil des Befestigungselements 20, 20' bzw. 20'' mit zur Halterung des zu befestigenden Teils beiträgt und abdichtet. Es ergibt sich damit eine sehr wirksame, vibrationsarme und verschiebegesicherte sowie gegen eine Trägeröffnung abgedichtete Halterung eines Teils an einem Träger.

## Patentansprüche

1. Halteelement aus Kunststoff, mit einem Haltedübel (2) mit bolzenartigem Grundkörper (3) und einem Abschlussteil (4), wobei der Grundkörper an dem dem Abschlussteil gegenüberliegenden Ende offen ausgebildet ist und mindestens einen, sich in Längsrichtung erstreckenden, faltenartig eingezogenen Bereich (5, 6, 7, 8,) aufweist, in welchem auf dem Umfang des Grundkörpers (3), dem Abschlussteil (4) gegenüberliegend, Rastelemente angeordnet sind, wobei der Haltedübel (2) über das Abschlussteil (4) mit einem Befestigungselement (20) verbunden ist,
**dadurch gekennzeichnet,**
**dass** das Abschlussteil (4) des Haltedübels (2) als Halteplatte (14) mit Eingriffselementen (15) ausgebildet ist,
**dass** das Befestigungselement (20) aus einem gegenüber dem Material des Haltedübels (2) weicheren Material besteht,
**dass** das Befestigungselement (20) und der Haltedübel (2) im Zweikomponenten-Spritzverfahren hergestellt sind,
**dass** das Befestigungselement (20) oberhalb der Halteplatte (14) einen Andruckbereich (17) aufweist, welcher kuppelartig gewölbt ausgebildet ist und
**dass** der Andruckbereich (17) über mindestens einen Steg (21, 22) mit einem unterhalb der Halteplatte (14) liegenden Dichtbereich (30) verbunden ist (Fig. 1-7).

2. Halteelement nach Anspruch 1, **dadurch gekennzeichnet, dass** der Dichtbereich (30) und der Andruckbereich (17) jeweils rotationssymmetrisch ausgebildet sind.

3. Halteelement nach Anspruch 1 und 2, **dadurch gekennzeichnet, dass** der Andruckbereich (17) und der Dichtbereich (30) über mindestens zwei einander diagonal gegenüberliegende Stege (21, 22) miteinander verbunden sind.

4. Halteelement aus Kunststoff, mit einem Haltedübel (2') mit bolzenartigem Grundkörper (3) und einem Abschlussteil (4'), wobei der Grundkörper an dem dem Abschlussteil gegenüberliegenden Ende offen ausgebildet ist und mindestens einen, sich in Längsrichtung erstreckenden, faltenartig eingezogenen Bereich (5, 6, 7, 8) aufweist, in welchem auf dem Umfang des Grundkörpers (3), dem Abschlussteil gegenüberliegend, Rastelemente angeordnet sind, wobei der Haltedübel (2') über das Abschlussteil (4') mit einem Befestigungselement (20') verbunden ist,
**dadurch gekennzeichnet, dass**
dass das Abschlussteil (4') mindestens einen Lagerbereich (23) aufweist,
dass das Befestigungselement (20') aus einem gegenüber dem Material des Haltedübels (2') weicheren Material besteht,
dass das Befestigungselement (20') und der Haltedübel (2') im Zweikomponenten-Spritzverfahren hergestellt sind,
dass das Befestigungselement (20') über einen Zwischenbereich (25) und mindestens einen Rohrhaltebereich (26) mit dem Abschlussteil (4') verbunden ist,
dass der Rohrhaltebereich (26) des Befestigungselements (20') schalenförmig in den Lagerbereich (23) des Abschlussteils (4') eingebettet ist und
dass der Zwischenbereich (25) mit einem unterhalb des Abschlussteils (4') angeordneten Dichtbereich (30') des Befestigungselements (20') verbunden ist, welcher den Grundkörper (3) des Haltedübels (2') umschließt. (Fig. 8-10).

5. Halteelement nach Anspruch 4, **dadurch gekennzeichnet, dass** beidseitig des Zwischenbereichs (25) ein Rohrhaltebereich (26) in einen Lagerbereich (23) eingebettet ist.

6. Halteelement nach Anspruch 4 und 5, **gekennzeichnet durch** Begrenzungszonen (27, 28) des Lagerbereichs (23) in einer Rohreintrittszone (R).

7. Halteelement nach Anspruch 6, **dadurch gekennzeichnet, dass** die Begrenzungszonen (27, 28) zumindest teilweise Abschlussflächen des Rohrhaltebereichs (26) überdecken.

8. Halteelement nach Anspruch 4, **gekennzeichnet durch** mindestens einen Verbindungssteg zwischen dem Zwischenbereich (25) und dem Dichtbereich (30).

9. Halteelement aus Kunststoff, mit einem Haltedübel (2") mit bolzenartigem Grundkörper (3) und einem Abschlussteil (4"), wobei der Grundkörper an dem dem Abschlussteil gegenüberliegenden Ende offen ausgebildet ist und mindestens einen, sich in Längsrichtung erstreckenden, faltenartig eingezogenen Bereich (5, 6, 7, 8) aufweist, in welchem auf dem Umfang des Grundkörpers (3), dem Abschlussteil gegenüberliegend, Rastelemente angeordnet sind, wobei der Haltedübel (2") über das Abschlussteil (4") mit einem Befestigungselement (20") verbunden ist,
**dadurch gekennzeichnet,**
**dass** das Abschlussteil (4") als Flansch (35) ausgebildet ist,
**dass** das Befestigungselement (20") aus einem gegenüber dem Material des Haltedübels (2") weicheren Material besteht,
**dass** das Befestigungselement (20") und der Haltedübel (2") im Zweikomponenten-Spritzverfahren hergestellt sind,
**dass** oberhalb und/oder unterhalb des Flansches (35) zwei Scheiben (40, 41) des Befestigungselements (20") angeordnet sind, und
**dass** die untere Scheibe (41) eine Dichtscheibe (30) bildet (Fig. 11 - 13).

10. Halteelement nach Anspruch 9, **dadurch gekennzeichnet, dass** die beiden Scheiben (40, 41) des Befestigungselements (20") miteinander verbunden sind.

11. Halteelement nach Anspruch 9 oder 10, **dadurch gekennzeichnet, dass** die untere Scheibe (41) des Befestigungselements (20") den Grundkörper (3) des Haltedübels (2") umschließt.

12. Halteelement nach Anspruch 9 - 11, **dadurch gekennzeichnet, dass** die obere Scheibe (40) des Befestigungselements (20") zwischen dem Flansch (35) und einer Begrenzungsscheibe (36) des Abschlussteils (4") angeordnet ist.

13. Halteelement nach einem oder mehreren der Ansprüche 9 - 12, **dadurch gekennzeichnet, dass** der hohl ausgebildete, aus hartem Material bestehende Grundkörper (3) in weicheres Material des Befestigungselements (20, 20', 20") eingebettet ist.

## Claims

1. Plastic retaining element, having a retaining peg (2) with a bolt-like base body (3) and an end part (4), the base body being designed so that it is open at the end lying opposite the end part and having at least one region (5, 6, 7, 8) which extends in the longitudinal direction, is drawn in in a pleated manner and in which latching elements are arranged on the circumference of the. base body (3) lying opposite the end part (4), the retaining peg (2) being connected to a fastening element (20) via the end part (4), **characterized in that** the end part (4) of the retaining peg (2) is designed as a retaining plate (14) having engagement elements (15), **in that** the fastening element (20) consists of a softer material than the material of the retaining peg (2), **in that** the fastening element (20) and the retaining peg (2) are produced by two-component injection moulding, **in that** the fastening element (20) has, above the retaining plate (14), a contact pressure region (17) which is designed so that it is curved in a dome-like manner, and **in that** the contact pressure region (17) is connected via at least one web (21, 22) to a sealing region (30) lying below the retaining plate (14) (Figs 1 - 7).

2. Retaining element according to Claim 1, **characterized in that** the sealing region (30) and the contact pressure region (17) are in each case designed so that they are rotationally symmetrical.

3. Retaining element according to Claims 1 and 2, **characterized in that** the contact pressure region (17) and the sealing region (30) are connected to each other via at least two webs (21, 22) lying diagonally opposite each other.

4. Plastic retaining element, having a retaining peg (2') with a bolt-like base body (3) and an end part (4'), the base body being designed so that it is open at the end lying opposite the end part and having at least one region (5, 6, 7, 8) which extends in the longitudinal direction, is drawn in in a pleated manner and in which latching elements are arranged on the circumference of the base body (3) lying opposite the end part, the retaining peg (2') being connected to a fastening element (20') via the end part (4'), **characterized in that** the end part (4') has at least one bearing region (23), **in that** the fastening element (20') consists of a softer material than the material of the retaining peg (2'), **in that** the fastening element (20') and the retaining peg (2') are produced by two-component injection moulding, **in that** the fastening element (20') is connected to the end part (4') via an intermediate region (25) and at least one pipe-retaining region (26), **in that** the pipe-retaining region (26) of the fastening element (20') is embedded in a shell-like manner in the bearing region (23) of the end part (4'), and **in that** the intermediate region (25) is connected to a sealing region (30') of the fastening element (20'), which sealing region is arranged below the end part (4') and encloses the base body (3) of the retaining peg (2') (Figs 8 - 10).

5. Retaining element according to Claim 4, **characterized in that** on both sides of the intermediate region (25) a pipe-retaining region (26) is embedded in a bearing region (23).

6. Retaining element according to Claims 4 and 5, **characterized by** boundary zones (27, 28) of the bearing region (23) in a pipe-entry zone (R).

7. Retaining element according to Claim 6, **characterized in that** the boundary zones (27, 28) at least partially cover end surfaces of the pipe-retaining region (26).

8. Retaining element according to Claim 4, **characterized by** at least one connecting web between the intermediate region (25) and the sealing region (30).

9. Plastic retaining element, having a retaining peg (2") with a bolt-like base body (3) and an end part (4"), the base body being designed so that it is open at the end lying opposite the end part and having at least one region (5, 6, 7, 8) which extends in the longitudinal direction, is drawn in in a pleated manner and in which latching elements are arranged on the circumference of the base body (3) lying opposite the end part, the retaining peg (2'') being connected to a fastening element (20") via the end part (4"), **characterized in that** the end part (4'') is designed as a flange (35), **in that** the fastening element (20'') consists of a softer material than the material of the retaining peg (2"), **in that** the fastening element (20") and the retaining peg (2") are produced by two-component injection moulding, **in that** two washers (40, 41) of the fastening element (20") are arranged above and/or below the flange (35), and **in that** the lower washer (41) forms a sealing washer (30) (Figs 11 -13).

10. Retaining element according to Claim 9, **characterized in that** the two washers (40, 41) of the fastening element (20") are connected to each other.

11. Retaining element according to Claim 9 or 10, **characterized in that** the lower washer (41) of the fastening element (20") surrounds the base body (3) of the retaining peg (2").

12. Retaining element according to Claims 9 - 11, **characterized in that** the upper washer (40) of the fastening element (20") is arranged between the flange (35) and a boundary washer (36) of the end part (4").

13. Retaining element according to one or more of Claims 9 - 12, **characterized in that** the base body (3) which is of hollow design and consists of hard material is embedded in softer material of the fastening element (20, 20', 20").

## Revendications

1. Elément de retenue en matière plastique, comportant une cheville de retenue (2) avec corps de base en forme de goujon (3) et une partie de fermeture (4), le corps de base étant réalisé ouvert à l'extrémité opposée à la partie de fermeture et présentant au moins une zone (5, 6, 7, 8) rétractée en formant des plis et s'étendant en direction longitudinale, dans laquelle des éléments d'enclenchement, opposés à la partie de fermeture (4), sont agencés sur la périphérie du corps de base (3), la cheville de retenue (2) étant reliée à un élément de fixation (20) par l'intermédiaire de la partie de fermeture (4),
**caractérisé en ce que** :
la partie de fermeture (4) de la cheville de retenue (2) est réalisée sous forme de plaque de retenue (14) avec des éléments d'engagement (15),
l'élément de fixation (20) est constitué par un matériau plus tendre par rapport au matériau de la cheville de retenue (2),
l'élément de fixation (20) et la cheville de retenue (2) sont fabriqués par procédé par injection de deux composants,
l'élément de fixation (20) présente en dessus de la plaque de retenue (14) une zone de pressage (17) qui est réalisée bombée à la manière d'une coupole, et
la zone de pressage (17) est reliée par au moins un voile (21, 22) avec une zone d'étanchéité (30) se trouvant en dessous de la plaque de retenue (14) (figures 1 à 7).

2. Elément de retenue selon la revendication 1, **caractérisé en ce que** la zone d'étanchéité (30) et la zone de pressage (17) sont chacune réalisées à symétrie de révolution.

3. Elément de retenue selon les revendications 1 et 2, **caractérisé en ce que** la zone de pressage (17) et la zone d'étanchéité (30) sont reliées l'une avec l'autre par au moins deux voiles (21, 22) opposés l'un à l'autre en diagonale.

4. Elément de retenue en matière plastique, comportant une cheville de retenue (2') avec corps de base en forme de goujon (3) et une partie de fermeture (4'), le corps de base étant réalisé ouvert à l'extrémité opposée à la partie de fermeture et présentant au moins une zone (5, 6, 7, 8) rétractée en formant des plis et s'étendant en direction longitudinale, dans laquelle des éléments d'enclenchement, opposés à la partie de fermeture, sont agencés sur la périphérie du corps de base (3), la cheville de retenue (2') étant reliée à un élément de fixation (20') par l'intermédiaire de la partie de fermeture (4'),
**caractérisé en ce que** :
la partie de fermeture (4') présente au moins une zone de palier (23),
l'élément de fixation (20') est constitué par un matériau plus tendre par rapport au matériau de la cheville de retenue (2'),
l'élément de fixation (20') et la cheville de retenue (2') sont réalisés par procédé par injection de deux composants,
l'élément de fixation (20') est relié à la partie de fermeture (4') par une zone intermédiaire (25) et par au moins une zone de maintien de tube (26),
la zone de maintien de tube (26) de l'élément de fixation (20') est encastrée en forme de coque dans la zone de palier (23) de la partie de fermeture (4'), et
la zone intermédiaire (25) est reliée à une zone d'étanchéité (30') agencée en dessous de la partie de fermeture (4'), de l'élément de fixation (20'), lequel entoure le corps de base (3) de la cheville de retenue (2') (figures 8 à 10).

5. Elément de retenue selon la revendication 4, **caractérisé en ce que** des deux côtés de la zone intermédiaire (25), une zone de maintien de tube (26) est encastrée dans une zone de palier (23).

6. Elément de retenue selon les revendications 4 et 5, **caractérisé par** des zones de limitation (27, 28) de la zone de palier (23) dans une zone d'entrée de tube (R).

7. Elément de retenue selon la revendication 6, **caractérisé en ce que** les zones de limitation (27, 28) recouvrent au moins en partie des surfaces de fermeture de la zone de maintien de tube (26).

8. Elément de retenue selon la revendication 4, **caractérisé par** au moins une traverse de liaison entre la zone intermédiaire (25) et la zone d'étanchéité (30).

9. Elément de retenue en matière plastique, comportant une cheville de retenue (2") avec corps de base en forme de goujon (3) et une partie de fermeture (4"), le corps de base étant réalisé ouvert à l'extrémité opposée à la partie de fermeture et présentant au moins une zone (5, 6, 7, 8) rétractée en formant des plis et s'étendant en direction longitudinale, dans laquelle des éléments d'enclenchement, opposés à la partie de fermeture, sont agencés sur la périphérie du corps de base (3), la cheville de retenue (2") étant reliée à un élément de fixation (20") par l'intermédiaire de la partie de fermeture (4"),
**caractérisé en ce que** :
la partie de fermeture (4") est réalisée sous forme de bride (35),
l'élément de fixation (20") est constitué par un matériau plus tendre par rapport au matériau de la cheville de retenue (2"),
l'élément de fixation (20") et la cheville de retenue (2") sont réalisés par procédé par injection de deux composants,
en dessus et/ou en dessous de la bride (35) sont agencées deux rondelles (40, 41) de l'élément de fixation (20"), et
la rondelle inférieure (41) forme une rondelle d'étanchéité (30) (figures 11 à 13).

10. Elément de retenue selon la revendication 9, **caractérisé en ce que** les deux rondelles (40, 41) de l'élément de fixation (20") sont reliées l'une à l'autre.

11. Elément de retenue selon l'une ou l'autre des revendications 9 et 10, **caractérisé en ce que** la rondelle inférieure (41) de l'élément de fixation (20") entoure le corps de base (3) de la cheville de retenue (2").

12. Elément de retenue selon les revendications 9 à 11, **caractérisé en ce que** la rondelle supérieure (40) de l'élément de fixation (20") est agencée entre la bride (35) et une rondelle de limitation (36) de la partie de fermeture (4").

13. Elément de retenue selon l'une ou plusieurs des revendications 9 à 12, **caractérisé en ce que** le corps de base (3) réalisé creux et constitué par un matériau dur est encastré dans du matériau plus tendre de l'élément de fixation (20, 20', 20").
